# EUROPEAN PATENT SPECIFICATION

(11) **EP 1 921 920 B1**
(45) Date of publication and mention of the grant of the patent: **30.01.2013**
(21) Application number: 06800935.6
(22) Date of filing: 08.08.2006
(51) Int. Cl.: A21D 10/02, B65B 25/00, B65D 85/36

(54) **DEVELOPED DOUGH PRODUCT IN MODERATELY-PRESSURIZED PACKAGE, AND RELATED METHODS**
GEGANGENES TEIGPRODUKT IN VERPACKUNGEN MIT MODERATEM DRUCK UND ENTSPRECHENDE VERFAHREN
PRODUIT DE PATE DEVELOPPEE PRESENTE DANS UN EMBALLAGE A PRESSION MODEREE ET PROCEDES CORRESPONDANTS

(30) Priority: 11.08.2005 US 707808 P
(43) Date of publication of application: 21.05.2008
(60) Divisional application: 10161781.9
(73) Proprietor: GENERAL MILLS MARKETING, INC., Minneapolis, MN 55440 (US)
(72) Inventor: DOMINGUES, David J., Plymouth, Minnesota 55441 (US); KIRK, David A., Coon Rapids, Minnesota 55448 (US)
(74) Representative: Vossius & Partner
(86) International application number: PCT/US2006/030835
(87) International publication number: WO 2007/021665

(56) References cited:
- WO-A-96/39041
- WO-A-2004/105496
- WO-A-2006/050228
- WO-A2-98/51159
- DATABASE FSTA [Online] INTERNATIONAL FOOD INFORMATION SERVICE (IFIS), FRANkFURT-MAIN, DE; SPARAKOWSKI W: "Longer shelf life and freshness without artificial preservatives." XP002417733 Database accession no. 93-1-06-m0088 & CEREALS & BAKERY PRODUCTS, vol. 7, no. 1, 1993, pages 44-48, FOOD MARKETING & TECHNOLOGY

## Description

The invention relates to refrigerator-stable, raw, developed dough compositions in pressurized (e.g., moderately-pressurized) packaging, and a related method.

Many dough products are prepared to be sold commercially as packaged, refrigerator-stable products. These packaged dough products can be stored at refrigerated conditions and cooked (e.g., baked) by removing the packaged dough from refrigerated storage and cooking the dough with little or no additional preparation. Refrigerator-stable dough products can be very desirable to consumers because of their convenience.

A variety of dough products are sold commercially as being refrigerator-stable. Examples include doughs sometimes referred to in the baking arts as "undeveloped" or "under-developed" doughs such as cookies, cakes, biscuits, scones, and batters; other examples include "developed" doughs such as breads and bread-like products including French bread, white or whole wheat bread (e.g., loaves), bread sticks, bread rolls, pizza dough, cinnamon rolls, raised donuts, and other products having developed dough properties.

Developed doughs are prepared to leaven and increase the size and decrease the density of the cooked (e.g., baked) dough product. This can be done by the action of yeast or by the action of chemical ingredients ("chemical leavening agents") that react to produce a leavening gas. Leavening can take place before baking, during baking, or both. Many refrigerator-stable developed dough products include chemical leavening agents and are allowed to proof before they are packaged, after packaging and during storage, or during baking.

A contributing component of a refrigerated dough product can be its packaging configuration and packaging materials. Packaging of a refrigerator-stable dough product can contribute to retaining freshness and for general protection of a packaged dough product over an extended period of refrigerated storage. Many types of packaging materials and package forms are used commercially, including pressurized cans and non-pressurized pouches or chubs.

WO 2004/105496 relates to a packaged dough product comprising a proofed dough composition in an unvented package comprising flexible film, the package containing less than 10% headspace and having an internal pressure less than 10 psig.

Raw packaged dough products continue to exhibit limited refrigerated shelf lives. A packaged dough, during extended refrigerated storage, may, for example, experience deteriorated freshness in the form of discoloration or loss of leavening properties upon baking. Other potential forms of damage can be simple physical damage from being handled, bumped, or otherwise disturbed when being transported and placed for sale. A continuing goal in the packaged food arts is to limit damage to dough compositions and improve the shelf life of dough products such as refrigerated dough products.

The invention relates to raw, refrigerator-stable, chemically-leavened (i.e., chemically-leavenable), developed dough compositions, packaged dough products, and related methods. Chemically-leavened, refrigerator stable, developed dough compositions are prepared to provide desired refrigerator storage stability and desired raw and cooked leavening properties. Specific volume and refrigerator storage stability can be achieved by combinations of factors relating to, e.g., formulation of the dough composition, package configuration.

Broadly, exemplary dough compositions can be formulated to exhibit a conventional raw specific volume during preparation and processing. The dough can be packaged and can expand (e.g., leaven) during refrigerated storage based on the action of chemical leavening agents to become proofed or partially proofed during refrigerated storage within the package. The package can be sized, and the dough composition can be placed in the package, to accommodate expansion of the dough composition within the package to within a desired range of specific volume, while achieving a desired internal package pressure. The desired specific volume can be a specific volume that will increase total expansion of the dough composition during baking, meaning that the desired raw specific volume within the package results in an increased cooked (e.g., baked) specific volume, relative to a lower raw specific volume. The internal pressure upon expansion of the dough composition within the package can be sufficient to result in refrigerated storage stability, can optionally provide protection to the leavened or partially leavened dough composition contained in the package, and can for example be greater than atmospheric pressure but not as high as other standard pressurized refrigerated dough packages, e.g., not as high as about 15 pounds per square inch, gauge (103421 Pa).

For example, when processed and packaged, exemplary dough compositions can exhibit a raw specific volume in the range from 0.9 to 1.1 cubic centimeters per gram. The dough can be packaged in a sealed package and the dough composition can expand during refrigerated storage to a raw specific volume in the range from 1.7 to 2.3 cubic centimeters per gram. The package containing the expanded dough composition can exhibit an internal pressure in the range from 8 to 10 pounds per square inch, gauge (55158 to 68947 Pa).

Properties of the dough and packaged dough composition can be achieved by selection of packaging and packaging volumes, dough volume, and dough formulation.

Exemplary doughs include basic and acidic chemical leavening agents to provide desired raw and cooked specific volumes, e.g., an encapsulated basic chemical leavening agent, a soluble acidic chemical leavening agent, and an insoluble acidic chemical leavening agent.

Preferably, the dough composition comprises
an acidic chemical leavening agent comprising in combination with sodium aluminum phosphate, and
an acidic chemical leavening agent selected from the group consisting of sodium pyrophosphate, glucono-delta-lactone, and mixtures thereof; and
an encapsulated basic chemical leavening agent.

More preferably, the dough composition comprises
from 0.5 to 1.0 weight percent sodium aluminum phosphate, and
from 0.3 to 1.0 weight percent acidic chemical leavening agent selected from the group consisting of sodium pyrophosphate, glucono-delta-lactone, and mixtures thereof, and
from 0.5 to 1.3 weight percent encapsulated basic chemical leavening agent.

According to certain embodiments, a soluble acidic leavening agent can contribute to a desired raw specific volume. In general, a soluble acidic agent (as opposed insoluble acidic agent) can react to produce leavening gas during refrigerated storage. This gas can increase the specific volume of the raw dough by causing the dough to expand during refrigerated storage, while contained in a dough package. Secondarily, the gas produced during refrigerated storage can contribute to increased baked specific volume of the dough composition by expanding during baking. Thus, the increased raw specific volume results in an increased baked specific volume.

In addition to soluble acidic chemical leavening agent, embodiments of the invention can also include insoluble acidic chemical leavening agent. The insoluble acidic chemical leavening agent does not substantially dissolve at processing or refrigerated storage temperatures, but will dissolve at elevated temperatures such as cooking (e.g., baking) temperatures. Upon dissolving at an elevated temperature, the insoluble acidic chemical leavening agent will contribute additional leavening gas to further expand the dough during cooking and increase specific volume.

Dough compositions according to the invention can be any type of developed, "chemically-leavenable" or "chemically-leavened" (these terms being used interchangeably herein) dough composition. Exemplary types of developed chemically-leavened doughs include breads and bread-like doughs including French bread, bread rolls, pizza crust, raised donuts, etc.

A package used to contain the dough composition during refrigerated storage can be any type of package that can accommodate the dough formulations, volumes, and internal pressures described herein. The package may be a conventional spiral-wound paper or cardboard canister, a flexible package such as a chub (akin to packaging presently used to package many commercially available refrigerated cookie dough products), a pouch, or a flexible "form-fill seal package" having a peelable top seal, or may contain flexible and inflexible (e.g., rigid) components in combination. Exemplary packages can be made to include packaging materials that can be relatively impermeable to gases, i.e., that exhibit high barrier properties to gases such as oxygen, carbon dioxide, water vapor, etc. Package configurations do not require and can advantageously exclude a pressure relief valve or vent. In the case of a chub package or canned package configuration, the clipped ends and can end lids act as a passive vent valves until the dough expands and seals these vents closed.

The dough composition can be prepared, processed, sized, and shaped, as desired, and place in a package for expansion within the package during refrigeration.

Certain embodiments of dough compositions can be placed in a flexible package while frozen, and optionally with vacuum to remove gases from the package, then sealed. For example, a frozen dough can be placed in a flexible package that has sufficient internal fully-sized volume to allow for expansion of the dough composition within the package during refrigerated storage. The dough (if frozen) can thaw in the package and during refrigerated storage the dough can expand to a degree that fills the fully-sized volume, or a substantial portion of the fully-sized volume of the package without producing excessive pressure inside the package. For example, the dough can expand during refrigerated storage from a raw specific volume in the range from 0.9 to 1.1 cubic centimeters per gram to a raw specific volume in the range from 1.7 to 2.3 cubic centimeters per gram, to produce a packaged dough product having an internal pressure in the range from 8 to 10 psig (55158 to 68947 Pa). The dough composition can be stored in this package at refrigerated conditions for a useful amount of time, e.g., for up to 6, 10, 12, or more weeks without spoiling and without an excessive increase in the size or internal pressure of the package, which means no ballooning due to excessive production of carbon dioxide by the dough within the package that increases the package headspace.

Advantages of embodiments of the invention can include a relatively higher baked specific volume due to a relatively higher raw specific volume achieved by a dough composition during refrigerated storage. Further, according to some embodiments of the invention, a desirably low headspace and moderate internal package pressure can provide protection for a packaged dough product from physical damage that may otherwise occur during transport, storage, handling, and other movement and manipulation of the product. Thus, a combination of improved baked specific volume and added protection of a dough product within the package can be achieved by providing a dough composition that includes a relatively higher raw specific volume when packaged, and providing a moderately-pressurized package that surrounds the dough composition during transport, storage, handling, etc. Exemplary raw specific volumes are in the range from 1.7 to 2.3 cubic centimeters per gram. Exemplary internal pressure of a packaged dough having a raw specific volume within the range from 1.7 to 2.3 cubic centimeters per gram are the range from 8 to 10 psig (55158 to 68947 Pa). Headspace within the pressurized dough package may be relatively low, e.g., less than 10 percent, less than 5 percent, or less than 2 percent.

In one aspect, the invention relates to a packaged dough product comprising a chemically-leavened, developed, raw dough composition. The raw dough composition has a specific, volume in the range from 1.7 to 2.3 cubic centimeters per gram. The package has an internal pressure in the range from 8 to 10 pounds per square inch (gauge) (55158 to 68947 Pa).

In another aspect, the invention relates to a method of preparing a packaged dough composition. The method includes providing a chemically-leavened raw dough composition, providing a package, placing the raw dough composition in the package at a raw specific volume of the dough composition in the range from 0.9 to 1.1 cubic centimeters per gram, sealing the package, allowing the dough composition to expand within the sealed package to produce carbon dioxide based on reaction of chemical leavening agents. The composition expands to a raw specific volume in the range from 1.7 to 2.3 cubic centimeters per gram. The internal pressure of the dough package upon the dough composition achieving a raw specific volume in the range from 1.7 to 2.3 cubic centimeters per gram, is in the range from about 8 to 10 pounds per square inch gauge (55158 to 68947 Pa).

According to claim 15 the present invention comprises a refrigerated, packaged dough product comprising a raw dough composition in a flexible package. The package includes a thermally-formed package comprising a thermally-formed bottom portion, a top portion bonded to the bottom portion, and a pressurized interior. Forces on the bond due to pressure within the pressurized compartment apply in a shear direction and a tensile direction, and force in the shear direction is greater than force in the tensile direction. The package can be pressurized as desired, for example at a pressure that greater than ambient pressure, up to or exceeding in internal pressure of 15 psig (103421 Pa), such as in the range from 8 to 10 psig (55158 to 68947 Pa).

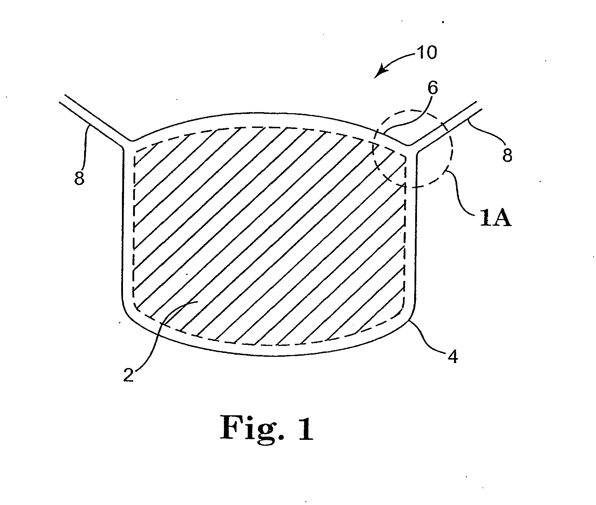

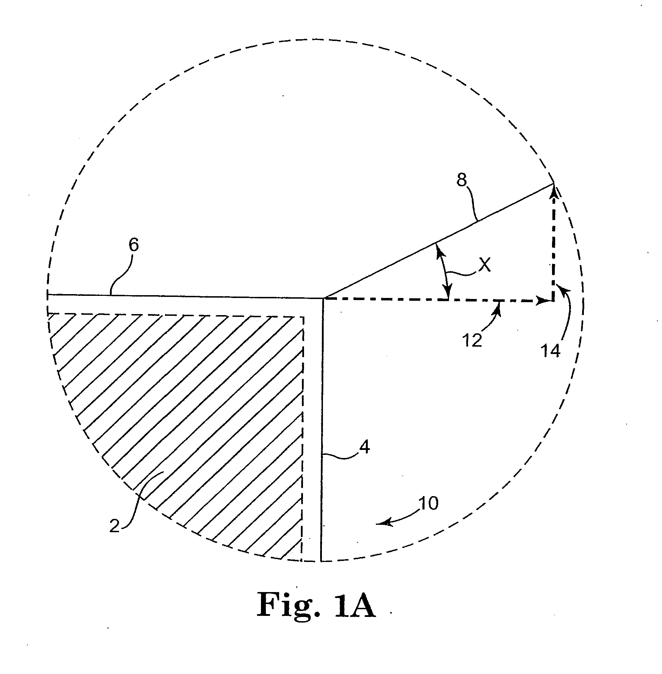

Figures 1-and 1A illustrate an exemplary package according to an aspect of the invention.

A dough composition according to the invention can be a refrigerator-stable, chemically-leaved (i.e., chemically-leavenable), developed, dough composition.

Developed doughs are generally understood to include doughs that have a developed gluten matrix structure; a stiff, elastic rheology; and that are capable of forming a matrix of relatively elastic bubbles or cells that hold a leavening gas while the dough expands (proofs, partially proofs, leavens, or rises) prior to or during cooking (e.g., baking). Features that are sometimes associated with a developed dough, in addition to a stiff, elastic rheology, include a liquid component content, e.g., water content, that is relatively high; a high protein content; a relatively low fat content; and processing steps that include time to allow the dough ingredients (e.g., protein) to interact and "develop" or strengthen the dough. Developed doughs in general can be yeast-leavened or chemically-leavened, and are normally relatively less dense prior to and after cooking (i.e., on average have a relatively higher specific volume) compared to un-developed doughs. Examples of specific types of doughs that can be considered to be developed doughs include doughs for pizza crust, breads (loaves, dinner rolls, baguettes, bread sticks), raised donuts and sweet rolls, cinnamon rolls, croissants, Danishes, pretzels, etc., as well as other types of developed doughs that are traditionally cooked to a relatively high specific volume, e.g., greater than 3.0 cubic centimeters per gram (cc/g).

In contrast to developed doughs, doughs generally referred to as undeveloped (or "non-developed" or "under-developed") doughs have an undeveloped (or less developed) matrix structure resulting in a non-elastic, or less elastic, rheology, and therefore relatively lower raw and baked specific volumes due to reduced gas retention by the dough. Examples of un-developed types of doughs include cookies, cakes, cake donuts, muffins, and other batter-type doughs such as brownies, biscuits, etc.

Chemically-leavened dough compositions are dough compositions that leaven to a substantial extent by the action of chemical ingredients that react to produce a leavening gas. Typically the ingredients include a basic chemical leavening agent and an acidic chemical leavening agent that react together to produce carbon dioxide, which, when retained by the dough matrix, causes the dough to expand. Chemically-leavenable doughs can be contrasted to dough formulations that are substantially leavened due to the action of yeast as a leavening agent, i.e., by metabolic action of yeast on a substrate to produce carbon dioxide. While doughs of the invention can include yeast, e.g., as a flavoring agent, certain dough compositions of the invention do not include yeast as a leavening agent.

Acidic chemical leavening agents are generally known in the dough and bread-making arts, with examples including sodium aluminum phosphate (SALP), sodium acid pyrophosphate (SAPP), monosodium phosphate, monocalcium phosphate monohydrate (MCP), anhydrous monocalcium phosphate (AMCP), dicalcium phosphate dihydrate (DCPD), glucono-delta-lactone (GDL), as well as a variety of others. Commercially available acidic chemical leavening agents include those sold under the trade names:
Levn-Lite® (SALP), Pan-O-Lite® (SALP+MCP), STABIL-9® (SALP+AMCP), PY-RAN® (AMCP), and HT® MCP (MCP). Optionally, an acidic chemical leavening agent for use according to the invention (either soluble or insoluble), can be encapsulated. One or a combination of these agents, known or developed in the future, can be used according to doughs of the invention.

According to certain embodiments of the dough compositions, a combination of acidic chemical leavening agents can be used to cause desired expansion of the dough composition during refrigerated storage and then during baking. For example, a dough composition may contain acidic chemical leavening agent considered to be relatively soluble, in combination with acidic agent considered to be relatively insoluble, to achieve desired leavening during refrigerated storage and then baking.

Relatively soluble acidic chemical leavening agents include agents that are soluble in a liquid (e.g., aqueous) component of the dough composition at a temperature used during processing (e.g., from 40°F to about 72°F (4.4°C to about 22.2°C) or refrigerated storage (e.g. from about 32°F to about 55°F (0°C to about 12.8°C)). A soluble acidic chemical leavening agent is sufficiently soluble to dissolve in a dough composition at a temperature within processing and refrigerated storage ranges and react with a basic chemical agent if available, e.g., is freely soluble or will substantially entirely dissolve. Particularly useful soluble acidic chemical leavening agents include glucono-delta-lactone and sodium acid pyrophosphate (SAPP) of a moderate to high solubility e.g., SAPP 60, SAPP 80, as well as other acidic chemical leavening agents that exhibit similar solubility behavior.

A dough compositions may alternately or additionally include insoluble acidic chemical leavening agent. Insoluble acidic chemical leavening agent refers to acidic chemical leavening agents that are not substantially soluble at a processing or refrigeration temperature but are insoluble or only slightly soluble at processing and refrigerated storage temperatures, and that are substantially soluble at temperatures that a dough reaches during cooking (e.g., baking or early baking). Insoluble acidic chemical leavening agents include sodium aluminum phosphate (SALP) and other acidic chemical leavening agents that have solubility properties that are similar to SALP.

A combination of soluble and insoluble acidic agents can result in a combination of desired raw and baked specific volumes. A desired raw specific volume can result from the soluble acidic agent reacting to produce a desired amount of leavening gas during processing or refrigerated storage, such as after packaging. A desired baked specific volume can result from the increased raw specific volume and the leavening gases produced during expansion of the dough during refrigerated storage; and further due to production of leavening gas by the insoluble acidic agent during cooking to produce an additional amount of leavening gas.

Acidic chemical leavening agent (soluble, insoluble, or combinations of these) can be present in an amount that provides one or more useful properties as described herein, including refrigerated stability, desired raw expansion properties and refrigerated raw specific volume, and desired baked leavening properties and baked specific volumes following refrigerated storage and upon cooking. For example, an amount of soluble acidic agent can be included to provide a raw specific volume in the range from 1.7 to 2.3 cubic centimeters per gram (e.g., 1.9 to 2.1 cc/g) upon expansion of a packaged dough composition during refrigerated storage. In addition, insoluble acidic agent can be included to contribute to in increased specific volume upon cooking (e.g., baking), such as example a baked specific volume in the range from 3.0 to 4.5 cc/g or greater, or from 3.5 to 4.0 cc/g.

To achieve desired combinations of dough properties as described, an amount of total acidic chemical leavening agent or agents (a single type or a combination) may be in the range to stoichiometrically neutralize the amount of basic leavening agent included in the dough formulation as determined by their inherent neutralization values. Exemplary useful amounts of soluble acidic agent can be a function of the neutralization value of the soluble acidic agent that is used (e.g., weight of basic agent neutralized by 100 parts leavening acid) and the stoichiometric amount of basic agent to be neutralized.

Exemplary amounts of total acidic chemical leavening agent (one or a combination) may be in the range from 0.5 to 5.0 weight percent soluble acidic agent, based on the total weight of a dough composition, e.g., from 0.8 to 3.0 weight percent.

When used in combination, the relative amounts of insoluble and soluble acidic agents can be any useful amounts, with examples of useful ratios of soluble to insoluble acidic agents being from 20:80 to 80:20, e.g., from 50:50 to 80:20, soluble acid to insoluble acid. Exemplary amounts of soluble acidic agent in a dough composition that contains both soluble and insoluble acidic agents, can be from 0.05 to 3, e.g., from 0.05 to 2.8 weight percent soluble acidic agent based on total weight of a dough composition; useful amounts of insoluble acidic agent in a dough composition that contains both soluble and insoluble acidic agents can be from 0.03 to 1.5, e.g., from 0.03 to 1.3 weight percent insoluble acidic agent, based on total weight of a dough composition.

The dough composition also includes encapsulated basic chemical leavening agent. Useful basic chemical leavening agents are generally known in the dough and baking arts and include soda, i.e., sodium bicarbonate (NaHCO₃), potassium bicarbonate (KHCO₃), etc. These and similar types of basic chemical leavening agents are generally freely soluble in an aqueous component of a dough composition at processing and refrigerated storage temperatures.

The amount of basic chemical leavening agent used in a dough composition may be sufficient to react with the amount of acidic chemical leavening agent to release a desired amount of gas for leavening, thereby causing a desired degree of expansion of the dough product. The typical amount of a basic chemical leavening agent such as sodium bicarbonate may be in the range from about 0.2 or 0.25 to about 1.5 weight percent based on the total weight of a dough composition, including the range from about 0.5 to about 1.3 weight percent based on total weight of a dough composition. (As used throughout this description and claims, unless otherwise noted, amounts of basic chemical leavening agents and encapsulated basic chemical leavening agents are given in terms of the amount of active basic agent not including the weight of any encapsulant or barrier material.)

Encapsulated basic chemical leavening agents are generally known, and can be prepared by methods known in the baking and encapsulation arts. An example of a method for producing enrobed particles is the use of a fluidized bed.

Encapsulated basic chemical leavening agents are typically particles that include solid basic chemical leavening agent particulates covered in part, e.g., substantially completely, by a barrier material or encapsulant. Encapsulated particles are known in the baking arts, and include encapsulated particles sometimes referred to as "enrobed" particles, as well as those sometimes referred to as "agglomerated" particles. The barrier material or encapsulant forms a coating or shell around a single or multiple particulates of solid basic chemical leavening agent, separating the chemical leavening agent from a bulk dough composition. "Enrobed" particles generally include a single particulate of chemical leavening agent covered or coated by barrier material, and "agglomerate" particles generally include 2, 3, or more particulates of chemical leavening agent contained in a mass of barrier material.

Encapsulating the basic chemical leavening agent provides separation between the basic chemical leavening agent and the bulk of the dough composition to inhibit, prevent, or slow the progress of reaction of the basic and acidic leavening agents. On the other hand, due to cracks, incomplete coverage, or damage to encapsulated particles, some amount of basic agent can be exposed, allowing it to dissolve into a dough composition, contact dissolved acid, and react to produce carbon dioxide. Due to such imperfect encapsulation, dissolved acidic agent can react with an amount of exposed basic agent during refrigerated storage, to produce carbon dioxide gas that can expand (e.g., proof or partially proof) the dough.

An encapsulated basic chemical leavening agent may be selected based on its degree of encapsulation or "activity." "Activity" refers to the percentage by weight of basic chemical leavening agent that is contained in encapsulated particles based on the total weight of the particles. A useful degree of encapsulation or activity can be an activity that allows a desired amount of basic agent to be released from encapsulation prior to baking, to result in desired stored and cooked dough properties. According to embodiments of the invention, an encapsulated basic chemical leavening agent can have any useful activity, with activities in the range from 50 to 90 percent, e.g., 70 to 80 percent, being exemplary.

The chemically-leavenable developed dough composition can contain other ingredients generally known in the dough and bread-making arts, typically including flour, a liquid component such as oil or water, sugar (e.g., glucose), chemical leavening agents as described, and optionally additional ingredients such as shortening, salt, dairy products, egg products, processing aids, emulsifiers, particulates, dough conditioners, yeast as a flavorant, other flavorings, etc. Many formulations for chemically-leavenable developed doughs are known to those skilled in the dough and baking arts and are readily available to the public in commercial cookbooks.

A flour component can be any suitable flour or combination of flours, including glutenous and nonglutenous flours, and combinations thereof. The flour or flours can be whole grain flour, wheat flour, flour with the bran and/or germ removed, or combinations thereof. Typically, a developed dough composition can include between about 30 percent and about 70 percent by weight flour, e.g., from about 40 percent to about 60 percent by weight flour, such as from about 45 to 55 weight percent flour.

Examples of liquid components include water, milk, eggs, and oil, or any combination of these. For example, a liquid component may include water, e.g., in an amount in the range from about 15 to 35 weight percent, although amounts outside of this range may also be useful. Water may be added during processing in the form of ice to control the dough temperature in-process; the amount of any such water used is included in the amount of liquid components. The amount of liquid components included in a developed dough composition can depend on a variety of factors including the desired moisture content and rheological properties of the dough composition. Typically, liquids (e.g., water) can be included in an ingredient in a developed dough composition in an amount between about 20 percent by weight and about 40 percent by weight, e.g., between about 25 percent by weight and about 35 percent by weight.

A developed dough composition can optionally include egg or dairy products such as milk, buttermilk, or other milk products, in either dried or liquid forms. Non-fat milk solids which can be used in the dough composition can include the solids of skim milk and may include proteins, mineral matter, and milk sugar. Other proteins such as casein, sodium caseinate, calcium caseinate, modified casein, sweet dairy whey, modified whey, and whey protein concentrate can also be used in these doughs.

A developed dough composition can optionally include fat ingredients such as oils (liquid fat) and shortenings (solid fat). Examples of suitable oils include soybean oil, corn oil, canola oil, sunflower oil, and other vegetable oils. Examples of suitable shortenings include animal fats and hydrogenated vegetable oils. If included in a developed dough, fat is typically used in an amount less than about 10 percent by weight, often less than 5 percent by weight of the dough composition.

A developed dough can optionally include one or more sweeteners, either natural or artificial, liquid or dry. Examples of suitable dry sweeteners include lactose, sucrose, fructose, dextrose, maltose, corresponding sugar alcohols, and mixtures thereof. Examples of suitable liquid sweeteners include high fructose corn syrup, malt, and hydrolyzed corn syrup.

The dough composition can further include additional flavorings, for example, salt, such as sodium chloride and/or potassium chloride; whey; malt; yeast extract; yeast (e.g., inactivated yeast); spices; vanilla; etc.; as is known in the dough product arts.

As is known, dough compositions can also optionally include other additives, colorings, and processing aids such as emulsifiers, strengtheners (e.g., ascorbic acid), preservatives, and conditioners. Suitable emulsifiers include lecithin, mono- and diglycerides, polyglycerol esters, and the like, e.g., diacetylated tartaric esters of monoglyceride (DATEM) and sodium stearoyl-2-lactylate (SSL). Acidulants commonly added to food foods include lactic acid, citric acid, ascorbic acid, tartaric acid, malic acid, acetic acid, phosphoric acid, and hydrochloric acid.

Conditioners, as are known in the dough products art, can be used to make the dough composition tougher, drier, and/or easier to manipulate. Examples of suitable conditioners can include azodicarbonamide, potassium sulfate, potassium sorbate, L-cysteine, L-cysteine hydrochloride, sodium bisulfate, mono- and diglycerides, polysorbates, sodium bisulfite, sodium stearoyl lactylate, ascorbic acid and diacetyltartaric acid esters of mono- and di-glycerides (DATEM), and the like. These conditioners may add functionality, reduce mix times, and provide softness to the doughs to which they are added.

Dough compositions described herein can be prepared according to methods and steps that are known in the dough and dough product arts. These can include steps of mixing or blending ingredients, folding, lapping with and without fat or oil, forming, shaping, cutting, rolling, filling, etc., which are steps well known in the dough and baking arts. Straight-dough, sponge, or continuous methods may be used, as will be understood.

Dough compositions of the invention can be packaged for transport and sale in a pressurized package as described, e.g., a moderately-pressurized package, and sold in a form that can be refrigerator-stable. Examples of useful packaging configurations include wound cardboard and paper cans or canisters; paper or plastic tubes or trays; flexible packaging such as chubs, pouches, tubes, and form-fill packages; and combinations of any of these.

Packaging materials can be flexible and may be prepared from materials such as paper or polymeric materials, such as polymeric (e.g., plastic) film. A polymeric film may be prepared from generally well known packaging material polymers such as different polyesters (e.g., PET), nylons, polyolefins (e.g., polyethylene), vinyls, polyalcohols, etc.

A form-fill package refers to a package that is formed (e.g., thermoformed) to a size and shape that approximates the dough piece that the package will contain. Upon expansion of the dough within the formed package, after sealing, the dough can expand to fit the pre-formed shape of the package. Exemplary form-fill package configurations can include a flexible material such as a formed flexible plastic portion and a flexible film portion that closes a formed dough compartment. The packaging can be designed to produce or maintain a pressurized interior space, e.g., an interior pressure in the range from 8 to 10 psig (55158 to 68947 Pa).

An example of a form-fill package is shown schematically in figures 1 and 1A. Figure 1A is a close up window of a corner of the package of figure 1. Figure 1A illustrates a package or portion of package 10, containing dough piece 2. Package 10 includes bottom portion 4 that is shaped by thermoforming to contain piece 2, and top portion 6 that is a relatively flat sheet bonded to bottom portion 4. Top portion 6 and bottom portion 4 form bonded portion 8 at their bonded interface.

Referring to figures 1 and 1A, the package includes a seal (bond) around the perimeter of dough piece 2 where top portion 6 is sealed to bottom portion 4. The seal can be formed as desired, e.g., using an adhesive, thermal bonding, etc.

As shown at figure 1A, the seal exhibits a shear component (vector) 12 and a tensile component (vector) 14. The seal can be designed to be broken by peeling top portion 6 away from bottom portion 4 to break the seal in a substantially tensile direction (i.e., top portion 6 can be pulled in a direction that is substantially perpendicular from the plane of bottom portion 4). The force due to pressure within the pressurized compartment of package 10 applies to the seal in both a shear direction (shown by shear component 12) and a tensile direction (shown by tensile component 14). Desirably, the total force of the pressure within package 10 can apply to the shear component 12 in an amount that is greater or substantially greater than the amount of the total force that applies to the tensile component 14. For example, the magnitude of a tensile force vector 14 may be less than the magnitude of a shear force vector 12, such as less than 75 percent, e.g., less than 50 percent, 30 percent, or less than 20 percent of the magnitude of the shear vector 12. Desired relative magnitudes of each of shear vector 12 and tensile vector 14 can be achieved by bonding top portion 6 to bottom portion 4, and controlling the angle (X) at which the bond is formed between lower portion 4 and top portion 6; as illustrated, lower portion 4 meets top portion 6 to form acute angle X at the location of the bond surrounding the dough compartment. A greater relative magnitude for the shear vector 12 compared to the tensile vector 14 results. The bond is also easy to open due to the relatively low tensile strength, and can be broken by peeling top portion 6 of the package from bottom portion 4.

A seal such as that illustrated at figure 1 can be produced by any useful means, such as by heat sealing, adhesives, or both. In combination with the shape of the package portions and their orientation at the seal, a desired seal strength can be used to produce a desired ratio of tensile to shear forces as described. Features of the seal that can affect seal strength may include the composition of the packaging material; the composition and type of adhesive, if used; and nature of the thermal bonding process (if used), including temperature and duration of a thermal bonding step.

According to certain embodiments of the invention a dough composition can be formulated so that after being packaged in an unproofed condition the dough expands while packaged, e.g., during refrigerated storage. An unproofed dough composition, e.g., having a raw specific volume in the range from 0.9 to 1.1 cc/g, can be placed in a package optionally with reduced or limited headspace. During refrigerated storage, the unproofed dough composition can experience an amount of expansion while inside the package to result in a raw specific volume in the range from 1.7 to 2.3 cc/g, e.g., from 1.9 to 2.1 cc/g. This expansion occurs at refrigerated conditions due to reaction between acidic chemical leavening agent, e.g., soluble acidic agent, with basic chemical leavening agent; soluble acid agent can dissolve and react with an amount of basic agent that is exposed to the acidic agent due to imperfect encapsulation of the basic agent.

The amount of headspace in a package that contains an expanded dough composition (i.e., a package containing expanded dough at a raw specific volume of 1.7 to 2.3.cc/g, and pressure from 8 to 10 psig) can be any amount of headspace, and may be an amount that is useful to reduce damage to the dough composition contained in the package (e.g., contained within a compartment of a form-fill package at an internal pressure in the range from 8 to 10 psig (55158 to 68947 Pa). Headspace refers to the amount of internal volume of a packaged dough product not taken up by dough composition; i.e., the internal volume as packaged not including the dough product. (Headspace does not include space not used but available in the form of wrinkled or folded packaging material or due to an inefficient shape of the dough composition.) Examples of useful amounts of headspace within a package, after expansion of a dough composition to a raw specific volume in the range from 1.7 to 2.3 cc/g, can be, e.g., less than 10 percent, less than 5 percent, or less than 2 percent headspace.

A flexible package for containing the dough composition can be flexible but is not necessarily stretchable. During placement of the dough composition into a flexible package, the package can optionally be evacuated by vacuum or mechanical means to reduce headspace. Evacuating a flexible package reduces headspace and may produce folds or wrinkles that allow an increase in internal volume of the flexible package without substantial stretching of the package, to accommodate an increase in volume of the dough composition while the dough composition expands inside the package during refrigerated storage. Alternately or in addition, the dough composition and package may exhibit an inefficient geometry or shape that allows the dough composition to expand within the package during refrigerated storage (e.g., the package exhibits a low or inefficient ratio of internal volume to surface area, and can change shape to produce a higher and more efficient ratio of volume to surface area upon expansion of the dough composition contained by the package). Examples of flexible packaging materials and methods of packaging chemically-leavened doughs are discussed, e.g., in Applicant's copending United States patent application US-A 2004-0241292, filed May 28, 2003, entitled "PACKAGED DOUGH PRODUCT IN FLEXIBLE PACKAGE, AND RELATED METHODS," and United States patent application US-A 2005-0281922, filed May 19, 2005, entitled PACKAGED, DEVELOPED DOUGH PRODUCT IN LOW PRESSURE PACKAGE, AND RELATED METHODS.

A package can be sized to accommodate an expanded (e.g., partially-proofed) dough composition, meaning that the package is of sufficient size (volume) to contain the dough composition upon expansion of the dough within the package. For example, the fully-sized (maximum internal volume without stretching) volume of package (e.g., a flexible package) may be from about 1.5 to 3.5 times the volume of the dough composition when placed in the package (e.g., at an initial raw specific volume in the range from 0.9 to 1.1 cc/g). Matching the fully-sized volume of a package to the approximate volume of the dough composition after expansion within the package, e.g., to a raw specific volume in the range from 1.7 to 2.3 cc/g, can allow an expanded dough composition to fit well in the package with limited headspace and with a moderately-pressurized interior.

The packaged dough will expand due to production of carbon dioxide by the dough composition. Carbon dioxide production within the dough causes the dough composition itself to expand and to exert pressure within the package. Additionally, some carbon dioxide may also be released directly into the package headspace, resulting in package expansion and an increase in internal package pressure. Upon expansion of the dough composition within the sealed package the internal pressure of the package can become pressurized such as to a moderate pressure that is a pressure greater than a non-pressurized dough package -- e.g., a package having an internal pressure that is approximately atmospheric pressure - and that is below the pressure of a conventional "pressurized" dough package such as a pressurized can or canister typically having an internal pressure of at least 15 psig (103421 Pa). For example, an internal pressure of a package, following expansion of the dough composition during refrigerated storage, can be in the range from 8 to 10 psig (55158 to 68947 Pa).

Thus, embodiments of the invention allow placing a dough composition into a package, optionally with reduced or limited headspace, and allowing the dough composition to expand while contained in the package to produce a packaged dough product containing an expanded dough composition, limited headspace, and moderate internal pressure. Specific embodiments relate to a flexible package. During expansion of the dough composition inside of a flexible package, the internal volume of the flexible package can increase to accommodate the expanding dough composition by a change in form or shape of the packaging material (e.g., elimination of wrinkles or change in shape), without substantial stretching. A pressure relief valve is not required.

The expanded volume (the volume of a packaged dough composition upon expansion within a package to a raw specific volume of 1.7 to 2.3 cc/g) of a raw dough composition can be calculated so the fully-sized volume of the package can accommodate the expanded volume. The fully-sized volume of the package can be approximately equal to the volume of the expanded dough composition with limited headspace or essentially no headspace (e.g., less than 10 percent headspace or less than 2 percent headspace), and with the internal pressure of the packaged dough product in a desired range, i.e. from 8 to 10 psig (55158 to 68947 Pa). This may occur with minimal stretching of a flexible packaging material.

According to an example, a dough having a raw specific volume in the range from 0.9 to 1.1 cubic centimeters per gram can be provided in a flexible package. The packaging material can conform to the dough composition by wrinkling, folding, or may otherwise be shaped to conform to the volume of the contained dough composition, e.g., optionally by using a vacuum or mechanical means to remove headspace. The dough composition can be frozen if vacuum is used to reduce headspace, because the frozen dough composition is less susceptible to damage. The package can then be sealed. Optionally, headspace can be removed from a package using vacuum to produce a negative pressure inside the package, which can then be sealed. For example, a packaging chamber can be evacuated (e.g., to 0 - 5 millibar) prior to sealing. A flexible packaging material conforms and collapses about the dough. The dough is stored at refrigerated conditions and allowed to expand within the package due to the action of acidic and basic chemical leavening agents. As the dough expands the internal pressure exerted on the package causes the packaging material to expand to accommodate the expanded dough volume. According to certain embodiments of the invention the dough composition can expand to a raw specific volume in the range from 1.7 to 2.3 cc/g, with limited headspace such as less than 10 percent headspace, and to produce an internal pressure in the range from 8 to 10 psig (55158 to 68947 Pa). Optionally the dough composition can be removed from the package after weeks of refrigerated storage and baked to a baked specific volume in the range from 3.0 to 4.5 cubic centimeters per gram, or greater.

## Claims

1. A packaged dough product comprising a chemically-leavened, developed, raw dough composition, the raw dough composition having a specific volume in the range from 1.7 to 2.3 cubic centimeters per gram, the package having an internal pressure in the range from 8 to 10 pounds per square inch (gauge) (55158 to 68947 Pa).

2. The packaged dough product of claim 1 comprising
acidic chemical leavening agent comprising in combination
sodium aluminum phosphate, and
acidic chemical leavening agent selected from the group consisting of sodium pyrophosphate, glucono-delta-lactone, and mixtures thereof; and
encapsulated basic chemical leavening agent.

3. The packaged dough product of claim 2 comprising
from 0.5 to 1.0 weight percent sodium aluminum phosphate, and
from 0.3 to 1.0 weight percent acidic chemical leavening agent selected from the group consisting of sodium pyrophosphate, glucono-delta-lactone, and mixtures thereof, and
from 0.5 to 1.3 weight percent encapsulated basic chemical leavening agent.

4. The packaged dough product of claim 1 wherein the dough composition when baked has a baked specific volume in the range from 3.0 to 4.5 cubic centimeters per gram.

5. A method of preparing a packaged dough composition, the method comprising
providing a chemically-leavened raw dough composition,
providing a package,
placing the raw dough composition in the package at a raw specific volume of the dough composition in the range from 0.9 to 1.1 cubic centimeters per gram,
sealing the package,
allowing the dough composition to expand within the sealed package to produce carbon dioxide based on reaction of chemical leavening agents, the composition expanding to a raw specific volume in the range from 1.7 to 2.3 cubic centimeters per gram,
wherein the internal pressure of the dough package upon the dough composition achieving a raw specific volume in the range from 1.7 to 2.3 cubic centimeters per gram, is in the range from 8 to 10 pounds per square inch gauge(55 158 to 68 947 Pa).

6. The method of claim 5 wherein a fully-sized internal volume of the package is in the range from 1.5 to 3.3 times a volume of the raw dough composition when the raw dough composition has a raw specific volume in the range from 0.9 to 1.1 cubic centimeters per gram.

7. The method of claim 5 comprising freezing the raw dough composition while at a raw specific volume in the range from 0.9 to 1.1 cubic centimeters per gram, placing the frozen raw dough composition into the package, and sealing the package while the dough is frozen.

8. The method of claim 7 comprising, after the frozen raw dough composition is placed in the package, using vacuum to reduce headspace of the package, then sealing the package with an amount of headspace in the sealed package of less than 10 percent.

9. The method of claim 5 wherein the dough composition when baked has a specific volume in the range from 3.0 to 4.5 cubic centimeters per gram.

10. The packaged dough product of claim 1 or the method of claim 5 wherein the package is a form-fill package comprising a thermally-formed bottom portion and a top portion that is a relatively flat sheet bonded to the bottom portion, wherein the package can be opened by peeling the top portion away from the bottom portion.

11. The packaged dough product or method of claim 10 wherein the package comprises a seal between the top portion and the bottom portion, and the force upon the seal due to pressure within a compartment of the package applies to the seal in both a shear direction and a tensile direction.

12. The packaged dough product or method of claim 11 wherein a force in the shear direction is greater than a force in the tensile direction.

13. The packaged dough product of claim 12 wherein the seal is bonded by adhesive, thermal bonding, or a combination thereof.

14. The packaged dough product of claim 12 wherein the relative magnitude of force in the tensile direction is less than 75 percent, less than 50 percent, less than 30 percent, or less than 20 percent of the magnitude of force in the shear direction.

15. The packaged dough product of claim 1, which is a refrigerated, packaged dough product comprising a raw dough in a flexible package, wherein the package includes a thermally-formed package comprising a thermally-formed bottom portion, a top portion bonded to the bottom portion, and a pressurized interior.

## Patentansprüche

1. Verpacktes Teigprodukt, umfassend eine chemisch getriebene, gegangene, rohe Teigzusammensetzung, wobei die rohe Teigzusammensetzung ein spezifisches Volumen im Bereich von 1,7 bis 2,3 Kubikzentimeter pro Gramm aufweist, die Verpackung einen Innendruck im Bereich von 8 bis 10 Pound pro Quadrat-Inch Gauge (55158 bis 68947 Pa) aufweist.

2. Verpacktes Teigprodukt gemäß Anspruch 1, umfassend
saures chemisches Treibmittel, umfassend in Kombination
Natriumaluminiumphospat und
saures chemisches Treibmittel, ausgewählt aus der Gruppe bestehend aus Natriumpyrophosphat, Glucono-delta-lacton und Gemischen davon; und
verkapseltes basisches chemisches Treibmittel.

3. Verpacktes Teigprodukt gemäß Anspruch 2, umfassend
von 0,5 bis 1,0 Gewichtsprozent Natriumaluminiumphosphat, und
von 0,3 bis 1,0 Gewichtsprozent saures chemisches Treibmittel, ausgewählt aus der Gruppe bestehend aus Natriumpyrophosphat, Glucono-delta-lacton und Gemischen davon, und
von 0,5 bis 1,3 Gewichtsprozent verkapseltes basisches chemisches Treibmittel.

4. Verpacktes Teigprodukt gemäß Anspruch 1, wobei die Teigzusammensetzung, wenn gebacken, ein gebackenes spezifisches Volumen im Bereich von 3,0 bis 4,5 Kubikzentimeter pro Gramm aufweist.

5. Verfahren zum Herstellen einer verpackten Teigzusammensetzung, wobei das Verfahren umfasst:
Bereitstellen einer chemisch getriebenen rohen Teigzusammensetzung,
Bereitstellen einer Verpackung,
Anordnen der rohen Teigzusammensetzung in der Verpackung mit einem rohen spezifischen Volumen der Teigzusammensetzung im Bereich von 0,9 bis 1,1 Kubikzentimeter pro Gramm,
Abdichten der Verpackung,
Expandierenlassen der Teigzusammensetzung in der abgedichteten Verpackung, um auf der Basis der Umsetzung von chemischen Treibmitteln Kohlendioxid zu erzeugen, wobei die Zusammensetzung auf ein rohes spezifisches Volumen im Bereich von 1,7 bis 2,3 Kubikzentimeter pro Gramm expandiert,
wobei der Innendruck der Teigverpackung bei Erreichen eines rohen spezifischen Volumens durch die Teigzusammensetzung im Bereich von 1,7 bis 2,3 Kubikzentimeter pro Gramm im Bereich von 8 bis 10 Pound pro Quadrat-Inch Gauge (55158 bis 68947 Pa) beträgt.

6. Verfahren gemäß Anspruch 5, wobei ein vollständig dimensioniertes Innenvolumen der Verpackung im Bereich von 1,5- bis 3,3-mal dem Volumen der rohen Teigzusammensetzung liegt, wenn die rohe Teigzusammensetzung ein rohes spezifisches Volumen im Bereich von 0,9 bis 1,1 Kubikzentimeter pro Gramm aufweist.

7. Verfahren gemäß Anspruch 5, umfassend das Gefrieren der rohen Teigzusammensetzung während sie ein rohes spezifisches Volumen im Bereich von 0,9 bis 1,1 Kubikzentimeter pro Gramm aufweist, Anordnen der gefrorenen rohen Teigzusammensetzung in der Verpackung und Abdichten der Verpackung, während der Teig gefroren ist.

8. Verfahren gemäß Anspruch 7, umfassend, nachdem die gefrorene rohe Teigzusammensetzung in der Verpackung angeordnet ist, Verwenden von Unterdruck, um den Luftraum der Verpackung zu verringern, anschließend Abdichten der Verpackung mit einer Menge an Luftraum in der abgedichteten Verpackung von weniger als 10 Prozent.

9. Verfahren gemäß Anspruch 5, wobei die Teigzusammensetzung, wenn gebacken, ein spezifisches Volumen im Bereich von 3,0 bis 4,5 Kubikzentimeter pro Gramm aufweist.

10. Verpacktes Teigprodukt gemäß Anspruch 1 oder Verfahren gemäß Anspruch 5, wobei die Verpackung eine Form-Fill-Verpackung ist, umfassend einen warmgeformten unteren Teil und einen oberen Teil, der ein vergleichsweise flaches, an den unteren Teil gebundenes Bahnenmaterial ist, wobei die Verpackung durch Abziehen des oberen Teils von dem unteren Teil geöffnet werden kann.

11. Verpacktes Teigprodukt oder Verfahren gemäß Anspruch 10, wobei die Verpackung eine Dichtung zwischen dem oberen Teil und dem unteren Teil umfasst und die Kraft auf die Dichtung durch Druck in einem Kompartiment der Verpackung sowohl in einer Scherrichtung als auch in einer Zugrichtung auf die Dichtung wirkt.

12. Verpacktes Teigprodukt oder Verfahren gemäß Anspruch 11, wobei eine Kraft in der Scherrichtung größer als eine Kraft in der Zugrichtung ist.

13. Verpacktes Teigprodukt gemäß Anspruch 12, wobei die Dichtung durch Klebstoff, thermisches Binden oder eine Kombination davon gebunden ist.

14. Verpacktes Teigprodukt gemäß Anspruch 12, wobei die relative Größe der Kraft in der Zugrichtung weniger als 75 Prozent, weniger als 50 Prozent, weniger als 30 Prozent oder weniger als 20 Prozent der Größe der Kraft in der Scherrichtung ist.

15. Verpacktes Teigprodukt gemäß Anspruch 1, das ein gekühltes, verpacktes Teigprodukt ist, umfassend einen rohen Teig in einer flexiblen Verpackung, wobei die Verpackung eine thermisch geformte Verpackung enthält, umfassend einen thermisch geformten unteren Teil, einen an den unteren Teil gebundenen oberen Teil und einen unter Druck stehenden Innenraum.

## Revendications

1. Produit de pâte emballé, comprenant une composition de pâte crue développée à levée chimique, la composition de pâte crue ayant un volume spécifique dans la plage allant de 1,7 à 2,3 centimètres cubes par gramme, l'emballage ayant une pression interne dans la plage allant de 8 à 10 livres par pouce carré (manométrique) (55 158 à 68 947 Pa).

2. Produit de pâte emballé selon la revendication 1, comprenant :
un agent levant chimique acide comprenant en combinaison
du phosphate de sodium et d'aluminium, et
un agent levant chimique acide choisi dans le groupe constitué par le pyrophosphate de sodium, la glucono-δ-lactone, et des mélanges de ceux-ci, et un agent levant chimique basique encapsulé.

3. Produit de pâte emballé selon la revendication 2, comprenant :
de 0,5 à 1,0% en poids de phosphate de sodium et d'aluminium, et
de 0,3 à 1,0% en poids d'un agent levant chimique acide choisi dans le groupe constitué par le pyrophosphate de sodium, la glucono-δ-lactone, et des mélanges de ceux-ci, et
de 0,5 à 1,3% en poids d'un agent levant chimique basique encapsulé.

4. Produit de pâte emballé selon la revendication 1, dans lequel la composition de pâte, lors de sa cuisson, possède un volume spécifique cuit dans la plage allant de 3,0 à 4,5 centimètres cubes par gramme.

5. Méthode de préparation d'une composition de pâte emballée, la méthode comprenant les étapes consistant à
fournir une composition de pâte crue à levée chimique,
fournir un emballage,
placer la composition de pâte crue dans l'emballage à un volume spécifique cru de la composition de pâte allant de 0,9 à 1,1 centimètre cube par gramme,
sceller l'emballage,
permettre à la composition de pâte de gonfler au sein de l'emballage scellé afin de produire du dioxyde de carbone sur la base de la réaction des agents levants chimiques, la composition gonflant jusqu'à un volume spécifique cru dans la plage allant de 1,7 à 2,3 centimètres cubes par gramme,
où la pression interne de l'emballage de pâte, lorsque la composition de pâte obtient un volume spécifique cru dans la plage allant de 1,7 à 2,3 centimètres cubes par gramme, se trouve dans la plage allant de 8 à 10 livres par pouce carré (manométrique) (55 158 à 68 947 Pa).

6. Méthode selon la revendication 5, dans laquelle un volume interne en pleine taille de l'emballage se trouve dans la plage allant de 1,5 à 3,3 fois un volume de composition de pâte crue lorsque la composition de pâte crue possède un volume spécifique cru dans la plage allant de 0,9 à 1,1 centimètre cube par gramme.

7. Méthode selon la revendication 5, comprenant les étapes consistant à congeler la composition de pâte crue tout en étant à un volume spécifique cru dans la plage allant de 0,9 à 1,1 centimètre cube par gramme, placer la composition de pâte crue congelée dans l'emballage, et sceller l'emballage alors que la pâte est congelée.

8. Méthode selon la revendication 7, comprenant, après avoir placé la composition de pâte crue congelée dans l'emballage, les étapes consistant à utiliser une dépression pour réduire l'espace de tête de l'emballage, puis sceller l'emballage avec une quantité d'espace de tête dans l'emballage scellé inférieure à 10%.

9. Méthode selon la revendication 5, dans laquelle la composition de pâte, lors de sa cuisson, possède un volume spécifique dans la plage allant de 3,0 à 4,5 centimètres cubes par gramme.

10. Produit de pâte emballé selon la revendication 1 ou méthode selon la revendication 5, dans lesquels l'emballage est un emballage à remplissage de forme comprenant une portion inférieure thermoformée et une portion supérieure qui est une feuille relativement plate liée à la portion inférieure, où l'emballage peut être ouvert en décollant la portion supérieure de la portion inférieure.

11. Produit de pâte emballé ou méthode selon la revendication 10, dans lesquels l'emballage comprend un joint entre la portion supérieure et la portion inférieure, et la force exercée sur le joint due à la pression au sein d'un compartiment de l'emballage s'applique au joint dans un sens du cisaillement ainsi que dans un sens de la traction.

12. Produit de pâte emballé ou méthode selon la revendication 11, dans lesquels une force dans le sens du cisaillement est supérieure à une force dans le sens de la traction.

13. Produit de pâte emballé selon la revendication 12, dans lequel le joint est fixé par liaison adhésive, thermique, ou une combinaison de celles-ci.

14. Produit de pâte emballé selon la revendication 12, dans lequel la grandeur relative de la force dans le sens de la traction est inférieure à 75%, inférieure à 50%, inférieure à 30%, ou inférieure à 20% de la grandeur de la force dans le sens du cisaillement.

15. Produit de pâte emballé selon la revendication 1, qui est un produit de pâte emballé réfrigéré comprenant une pâte crue dans un emballage flexible, où l'emballage comprend un emballage thermoformé comprenant une portion inférieure thermoformée, une portion supérieure liée à la portion inférieure, et un intérieur pressurisé.
